(19) Europäisches Patentamt / European Patent Office / Office européen des brevets

(11) **EP 1 651 880 B1**

(12) **FASCICULE DE BREVET EUROPEEN**

(45) Date de publication et mention de la délivrance du brevet:
**18.07.2018 Bulletin 2018/29**

(21) Numéro de dépôt: **04760772.6**

(22) Date de dépôt: **12.05.2004**

(51) Int Cl.:
*F16D 48/06* ^(2006.01)

(86) Numéro de dépôt international:
**PCT/FR2004/050187**

(87) Numéro de publication internationale:
**WO 2004/102021 (25.11.2004 Gazette 2004/48)**

(54) **DISPOSITIF ADAPTATIF PILOTE D' ACCOUPLEMENT ENTRE UN MOTEUR ET UNE BOITE DE VITESSES DANS UN VEHICULE AUTOMOBILE**

ADAPTIVES KUPPLUNGSSTEUERUNGSSYSTEM EINES FAHRZEUGSANTRIEBSSTRANGS

CONTROLLED ADAPTIVE DEVICE FOR COUPLING AN ENGINE AND A GEARBOX IN A MOTOR VEHICLE

(84) Etats contractants désignés:
**AT BE BG CH CY CZ DE DK EE ES FI FR GB GR HU IE IT LI LU MC NL PL PT RO SE SI SK TR**

(30) Priorité: **14.05.2003 FR 0305783**

(43) Date de publication de la demande:
**03.05.2006 Bulletin 2006/18**

(73) Titulaire: **Valeo Embrayages**
**80009 Amiens Cedex 2 (FR)**

(72) Inventeurs:
• **MAUREL, Pascal**
**F-75009 PARIS (FR)**
• **HOFFMANN, Christian**
**F-75014 PARIS (FR)**

(74) Mandataire: **Cardon, Nicolas et al**
**Valeo Embrayages**
**Sce Propriété Intellectuelle**
**Le Delta**
**14, avenue des Béguines**
**95892 Cergy Pontoise Cedex (FR)**

(56) Documents cités:
EP-A- 0 856 677    DE-A- 10 036 820
DE-A- 10 060 642    FR-A- 2 794 509
FR-A- 2 830 217    US-A1- 2002 042 325
US-A1- 2002 134 637

**Description**

L'invention concerne un dispositif adaptatif piloté d'accouplement entre un moteur et une boîte de vitesses dans un véhicule automobile.

Un tel dispositif comprend un moyen d'accouplement entre l'arbre de sortie du moteur à combustion interne du véhicule automobile et un arbre d'entrée de la boîte de vitesses qui peut être du type mécanique à plusieurs rapports de transmission avec ou sans robotisation des changements de rapport. Le moyen d'accouplement est en général un embrayage à friction, commandé par un actionneur piloté par un système de traitement de l'information en fonction d'un certain nombre de paramètres mesurés ou estimés tels que des positions, des vitesses, des accélérations, des efforts, des couples, des pressions et des tensions électriques.

L'actionneur de commande de l'embrayage agit sur la position d'un organe mobile de cet embrayage, tel par exemple que la butée d'embrayage, qui détermine la position d'un plateau de pression et la charge appliquée à ce plateau par un diaphragme annulaire pour le serrage des garnitures de friction d'un disque relié à un arbre d'entrée de la boîte de vitesses, ce serrage déterminant le couple transmis par l'embrayage. L'actionneur peut aussi agir directement sur la charge appliquée sur le plateau de pression par une liaison mécanique ou hydraulique par exemple.

La commande automatisée de l'embrayage doit prendre en compte un grand nombre de grandeurs physiques, de grandeurs d'état et de grandeurs de commande qui sont mesurées ou estimées sur le moteur, sur la boîte de vitesses et sur le reste du véhicule et de signaux représentant la volonté du conducteur, l'adaptation du comportement de la transmission au style de conduite du conducteur, l'état dynamique du véhicule et l'état du dispositif de commande (initialisation, mode normal, mode dégradé, apprentissage, arrêt...) etc...

On a déjà proposé de commander l'embrayage pour lui faire transmettre un couple désiré, mais le couple transmis par l'embrayage varie de façon non linéaire en fonction de la pression ou de la position d'un organe de commande de l'embrayage, tel que la butée d'embrayage par exemple, il varie d'un embrayage à l'autre en raison des dispersions de fabrication, et il varie aussi en fonction d'un certain nombre de paramètres tels que la température, l'état des garnitures et des surfaces de friction, du mécanisme d'embrayage, etc...

Il est donc extrêmement difficile, voire impossible de commander automatiquement l'embrayage de façon correcte pour lui faire transmettre un couple désiré qui a été déterminé par des moyens de calcul et de traitement de l'information.

Le document US 2002/042325A1 décrit un dispositif de commande du moteur, de la boîte de vitesse et de l'embrayage d'un véhicule automobile, comprenant un module de pilotage qui calcule une consigne de position d'embrayage appliquée à un circuit de commande approprié, et des consignes de couple et de vitesse de rotation du moteur, appliquées à un système de commande du moteur. Le module de pilotage transmet également des consignes de paramètres d'exécution au circuit de commande de position d'embrayage qui exécute ces consignes, reçoit ensuite du module de pilotage un signal de qualité de commande et modifie les paramètres d'exécution pour améliorer la qualité de la prochaine commande.

La présente invention propose une solution, qui consiste à piloter l'embrayage de façon linéaire en couple transmissible, au moyen d'un dispositif de commande partagé en plusieurs modules de pilotage qui sont destinés à compenser en cascade les dispersions des divers composants de la transmission du véhicule et qui comprennent :

- un module de supervision de la transmission, mettant en oeuvre des stratégies de gestion de l'agrément de conduite qui pilotent l'embrayage en couple et/ou le moteur du véhicule en vitesse et/ou en couple et qui sont destinées à compenser la variabilité du comportement dynamique du moteur, de la boite de vitesses et du reste du véhicule, notamment des composants de la transmission reliés aux roues motrices du véhicule,

- un module de pilotage de l'embrayage en couple, qui permet de déterminer, entre autres, une bonne valeur de consigne d'une grandeur physique de commande interne ou externe de l'embrayage pour obtenir un couple transmissible souhaité dans l'embrayage en fonction d'une consigne de couple à transmettre, délivrée par le module de supervision de la transmission, et de divers signaux de grandeurs physiques, d'état ou de commande qui sont mesurés sur le moteur, sur la boîte de vitesses et sur le reste du véhicule,

- et un module de pilotage d'un actionneur de l'embrayage, qui permet de commander l'actionneur pour obtenir une grandeur physique de commande interne ou externe de l'embrayage en fonction d'une consigne fournie par le module de pilotage en couple de l'embrayage et de divers signaux de grandeurs physiques, d'état ou de commande qui sont mesurés sur le moteur, sur la boîte de vitesses et sur le reste du véhicule.

Ainsi, l'actionneur et son module de pilotage sont vus comme à peu près parfaits par le module de pilotage en couple de l'embrayage, et l'embrayage et son module de pilotage sont eux-mêmes vus comme à peu près parfaits par le module de supervision qui gère les stratégies de pilotage de l'embrayage et du moteur en tenant compte du comportement dynamique du moteur, de la boîte de vitesses et du reste du véhicule.

En partageant ce dispositif de commande en trois modules qui compensent chacun des variabilités de comportement d'éléments ou d'organes différents, on améliore les performances globales du dispositif et on tient davantage compte des variations des paramètres représentatifs de l'état ou de la commande des divers composants de la transmission du véhicule.

Le module de pilotage en couple de l'embrayage selon l'invention comprend des moyens de détermination d'une consigne du paramètre de commande de l'embrayage à partir d'une courbe apprise de variation de cette consigne en fonction du couple transmissible désiré.

Cette détermination de la consigne du paramètre de commande de l'embrayage et son application à l'embrayage, par l'intermédiaire de l'actionneur et de son module de pilotage, permettent de linéariser le système asservi formé par l'embrayage et son actionneur et donc de simplifier la commande de ce système et d'améliorer les performances de la commande.

Avantageusement, le dispositif selon l'invention comprend des moyens de calcul de la courbe de variation de la consigne du paramètre de commande de l'embrayage en fonction du couple transmissible désiré, ces moyens de calcul recevant en entrée des valeurs réelles mesurées ou estimées de ce paramètre de commande et du couple transmis par l'embrayage, lesdits moyens de calcul utilisant un modèle mathématique de la courbe de variation précitée et des moyens de mise à jour des paramètres de ce modèle, permettant de tenir compte en temps réel des évolutions à long terme de l'embrayage, et notamment de son usure.

Cet apprentissage et la mise à jour automatique de la courbe de variation du paramètre de commande de l'embrayage en fonction du couple transmissible désiré permettent une détermination précise et correcte en temps réel du signal de consigne du paramètre de commande d'embrayage, qui est appliqué au module de pilotage de l'actionneur.

Dans un mode de réalisation préféré de l'invention, le module de pilotage en couple de l'embrayage comprend un circuit de régulation recevant le signal précité de consigne de couple transmissible et une mesure ou une estimation du couple réellement transmis pour générer un signal d'écart appliqué à un circuit de correction.

Ce circuit de régulation permet de prendre en compte les variations à court terme des caractéristiques de l'embrayage, dues notamment aux variations de température, et de compenser les défauts de modélisation de la courbe de variation du paramètre de commande de l'embrayage en fonction du couple transmissible désiré.

Le circuit de correction peut être un correcteur du type P (proportionnelle), ou du type PI numérique (proportionnelle-intégrale), ou du type PI2 (proportionnelle-intégrale-intégrale), ou du type PID numérique à dérivée filtrée (proportionnelle-intégrale-dérivée), ou un régulateur à dérivateur d'ordre non entier du type CRONE, ou l'élément T d'un correcteur RST discrétisé, ou un filtre numérique, ce correcteur permettant d'amplifier ou de réduire certaines fréquences pour adapter le pilotage en couple à la stratégie d'accouplement-désaccouplement du moteur et de la boîte de vitesses.

Ce correcteur sert également à placer les pôles de l'embrayage asservi de manière à garantir une réponse dynamique optimale dépourvue d'instabilité ou de phénomènes oscillants qui seraient préjudiciables au confort et à l'agrément de conduite du véhicule, ainsi qu'à la tenue mécanique des organes de la transmission et de ses moyens de pilotage.

Le module de pilotage en couple de l'embrayage comprend également, en parallèle avec le circuit de régulation, un circuit de mise en forme en boucle ouverte recevant le signal précité de consigne de couple transmissible, ce circuit de mise en forme comprenant des moyens de mise à l'échelle, par exemple pour une normalisation du signal précité de consigne de couple transmissible par rapport à un couple moteur maximal, et éventuellement un filtre numérique pour amplifier ou réduire certaines fréquences et adapter le pilotage en couple à la stratégie d'accouplement-désacouplement du moteur et de la boîte de vitesses.

Dans un premier mode de réalisation de l'invention, les signaux de sortie de ce circuit de mise en forme, et du circuit de régulation sont appliqués à des moyens de sélection qui transmettent l'une de ces sorties aux moyens de détermination d'une consigne du paramètre de commande de l'embrayage.

Ces moyens de sélection sont destinés notamment à bloquer la transmission du signal de sortie du circuit de régulation, pour accélérer la réponse du dispositif, par exemple pour éviter le calage du moteur, et/ou pour découpler les régulations dans le cas d'une boîte de vitesses à deux arbres d'entrée reliés chacun par un embrayage à l'arbre de sortie du moteur.

La sortie des moyens précités de sélection est reliée aux moyens de détermination d'une valeur de consigne dudit paramètre de commande de l'embrayage à partir d'une courbe apprise de variation de la consigne du paramètre de commande en fonction de la consigne précitée de couple transmissible et la sortie de ces moyens de détermination est reliée par des moyens de mise en forme de signal au module de pilotage de l'actionneur.

Dans un autre mode de réalisation du dispositif selon l'invention, la sortie du circuit de mise en forme en boucle ouverte est reliée aux moyens de détermination d'une valeur de consigne du paramètre de commande de l'embrayage à partir d'une courbe apprise de variation de la consigne de paramètre de commande en fonction de la consigne précitée de couple transmissible et les signaux de sortie de ces moyens de détermination et du circuit de régulation sont appliqués par un sommateur d'effets et par des moyens de mise en forme au module de pilotage de l'actionneur.

Dans un autre mode de réalisation de l'invention, un signal de sortie du circuit de mise en forme en boucle ouverte est appliqué à une entrée d'un sommateur d'effets dont une autre entrée reçoit le circuit de sortie du signal de régulation par l'intermédiaire de moyens de sélection, et la sortie du sommateur d'effets est reliée aux moyens de détermination d'une consigne de paramètre de commande de l'embrayage à partir d'une courbe apprise de variation de la consigne de paramètre de commande en fonction de la consigne de couple transmissible par l'embrayage.

Le dispositif selon l'invention comprend également des moyens d'estimation en temps réel du couple transmis par l'embrayage, ces moyens comprenant des moyens de calcul du couple transmis par l'embrayage à partir des équations dynamiques du moteur et du véhicule connues par des mesures, des estimations et des calculs .

Le dispositif comprend également des moyens de calcul du couple transmis vu du côté moteur, des moyens de calcul du couple transmis vu du côté boîte de vitesses, et des moyens de sélection de l'un ou de l'autre de ces couples transmis calculés ou de combinaison linéaire de ces deux couples transmis calculés pour l'obtention d'un couple transmis estimé qui est appliqué au circuit de régulation précité du module de pilotage en couple.

Le dispositif selon l'invention comprend également des moyens d'apprentissage de l'inertie moteur et du frottement sec et visqueux équivalent de l'équipage mobile du moteur pendant des phases de pilotage du moteur où le couple transmis par l'embrayage est nul, et des moyens d'apprentissage de l'inertie du véhicule, du frottement visqueux équivalent de la chaîne de transmission ramené à l'entrée de la boîte de vitesses et de la charge du véhicule pendant les phases de déplacement en roue libre du véhicule où le couple transmis par l'embrayage est nul.

En variante, le dispositif selon l'invention peut comprendre des moyens de calcul des inerties du moteur et du véhicule, des frottements visqueux équivalents précités du moteur et de la chaîne de transmission du véhicule, et de la charge du véhicule à partir de mesures de la vitesse de rotation du moteur, de la vitesse ramenée à l'entrée de la boîte de vitesses et du couple produit par le moteur diminué du couple des accessoires du moteur.

L'invention s'applique également, bien entendu, à la commande de l'accouplement entre l'arbre de sortie d'un moteur de véhicule et une boîte de vitesses robotisée qui comprend deux arbres d'entrée en parallèle reliés chacun par un embrayage à l'arbre de sortie du moteur du véhicule.

Dans ce cas, chaque embrayage est commandé par un actionneur commandé lui-même par un module précité de pilotage d'actionneur et par un module de pilotage d'embrayage en couple.

L'invention sera mieux comprise et d'autres caractéristiques, détails et avantages de celle-ci apparaîtront plus clairement à partir de la description qui suit, faite à titre d'exemple en référence aux dessins annexés dans lesquels :

- La figure 1 est un schéma fonctionnel d'un véhicule équipé d'un dispositif selon l'invention, dans le cas d'une boîte de vitesses à un seul arbre d'entrée ;
- La figure 2 est un schéma fonctionnel d'un véhicule équipé d'une variante de réalisation du dispositif selon l'invention, dans le cas d'une boîte de vitesses robotisée à deux arbres d'entrée parallèles ;
- La figure 3 est une représentation schématique des caractéristiques essentielles du dispositif selon l'invention ;
- La figure 4 représente schématiquement un module de pilotage en couple d'un embrayage faisant partie du dispositif selon l'invention ;
- La figure 5 représente schématiquement une variante de réalisation de ce module de pilotage ;
- La figure 6 représente une autre variante de réalisation de ce module de pilotage ;
- La figure 7 représente schématiquement des moyens d'estimation du couple transmis par l'embrayage ;
- La figure 8 représente schématiquement une courbe de variation de la position d'une butée d'embrayage en fonction du couple transmissible par l'embrayage ;
- La figure 9 représente schématiquement un module de pilotage de l'actionneur de l'embrayage.

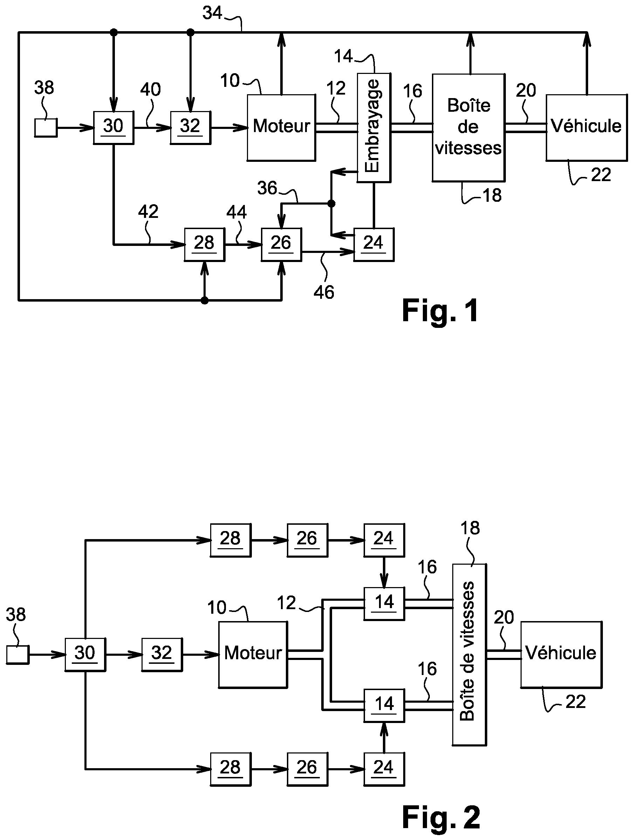

On a représenté schématiquement en figure 1 un véhicule automobile équipé d'un dispositif selon l'invention, la référence 10 désignant un moteur à combustion interne dont l'arbre de sortie 12 est relié par un embrayage 14 à l'arbre d'entrée 16 d'une boîte de vitesses par exemple robotisée 18 qui est du type mécanique à plusieurs rapports de transmission et dont l'arbre de sortie 20 est relié à des roues motrices du véhicule 22.

L'embrayage 14 est commandé par un actionneur 24 approprié, qui agit par exemple sur la position d'une butée d'embrayage. De façon bien connue de l'homme du métier, cette butée d'embrayage agit elle-même sur des doigts radiaux d'un diaphragme annulaire qui est porté par un couvercle d'embrayage et qui agit axialement sur un plateau de pression de l'embrayage pour le serrage des garnitures de friction d'un disque relié en rotation à l'arbre d'entrée 16 de la boîte de vitesses.

Il peut s'agir aussi d'un embrayage ouvert au repos, l'actionneur réalisant le serrage des garnitures par un moyen mécanique ou hydraulique. Les garnitures peuvent travailler à sec ou dans l'huile.

Le dispositif selon l'invention comprend un module 26 de pilotage de l'actionneur 24, ce module 26 recevant un signal de consigne généré par un module 28 de pilotage de l'embrayage en couple, ce module 28 recevant un signal de consigne de couple transmissible par l'embrayage fourni par un module 30 de supervision de la transmission qui fournit également des signaux de pilotage et de consigne à un système 32 de pilotage du moteur 10 du véhicule.

Des informations 34 en provenance du véhicule, du moteur et/ou du système de pilotage 32, et de la boîte de vitesses, par exemple telles que la vitesse de rotation du moteur, le couple fourni par le moteur, la quantité de carburant, la quantité d'air, le rapport de transmission utilisé, la température ambiante, la température du liquide de refroidissement, la vitesse du véhicule, la vitesse de rotation de l'arbre d'entrée de la boîte de vitesses, la vitesse des roues du véhicule, la tension électrique fournie par la batterie du véhicule, etc..., sont appliquées au module 26 de pilotage de l'actionneur, au module 28 de pilotage de l'embrayage en couple, au module 30 de supervision de la transmission et au système 32 de pilotage du moteur du véhicule.

Des informations 36 relatives à l'actionneur 24 et à l'embrayage 14, telles que des valeurs d'effort, de pression, de position d'un organe mobile de l'actionneur, de position de la butée d'embrayage, de tension électrique, d'intensité de courant électrique, de température, etc..., sont appliquées à des entrées du module 26 de pilotage de l'actionneur.

Des informations 38 appliquées à des entrées du module de supervision de la transmission 30 comprennent des signaux de gestion et d'adaptation de stratégies de pilotage de la transmission, relatives au fonctionnement du véhicule, aux intentions du conducteur, au mode automatique de commande de la transmission, à l'adaptabilité du comportement de la transmission, à des niveaux de confort et de performance, etc...

Le module 30 de supervision de la transmission génère, à partir de ces informations et de stratégies de gestion enregistrées en mémoire, des signaux 40 de pilotage et/ou de consigne qui sont appliqués au système 32 de pilotage du moteur 10, et des signaux 42 de consigne appliqués au module 28 de pilotage en couple de l'embrayage 14, les signaux 42 comprenant un signal de consigne de couple transmissible par l'embrayage 14.

Le module 28 de pilotage de l'embrayage recevant ces signaux 42 et les informations 34 fournies par le moteur 10, la boîte de vitesses 18 et le reste du véhicule 22, génère un signal 44 de pilotage du module 26 de pilotage de l'actionneur 24, ce signal 44 étant un signal de consigne du paramètre de commande de l'embrayage 14 tel par exemple que la position de la butée d'embrayage.

Le module 26 de pilotage de l'actionneur A reçoit ce signal de consigne 44, les informations 34 fournies par le moteur 10, la boîte de vitesses 18 et le reste du véhicule 22 et les informations 36 relatives à l'embrayage 14 et à son actionneur 24, et génère un signal 46 de commande de l'actionneur 24.

Dans la variante de réalisation représentée en figure 2, on retrouve sensiblement les mêmes composants et modules que dans le mode de réalisation de la figure 1, la différence étant que la boîte de vitesses 18 comprend deux arbres d'entrée 16 parallèles, reliés chacun par un embrayage 14 à l'arbre de sortie 12 du moteur 10, chaque embrayage 14 étant commandé par son actionneur 24 commandé lui-même par un module de pilotage 26 du type précité et par un module 28 de pilotage en couple de l'embrayage correspondant.

Les deux modules 28 de pilotage en couple sont commandés par un même module 30 de supervision de la transmission qui commande également le système 32 de pilotage du moteur 10.

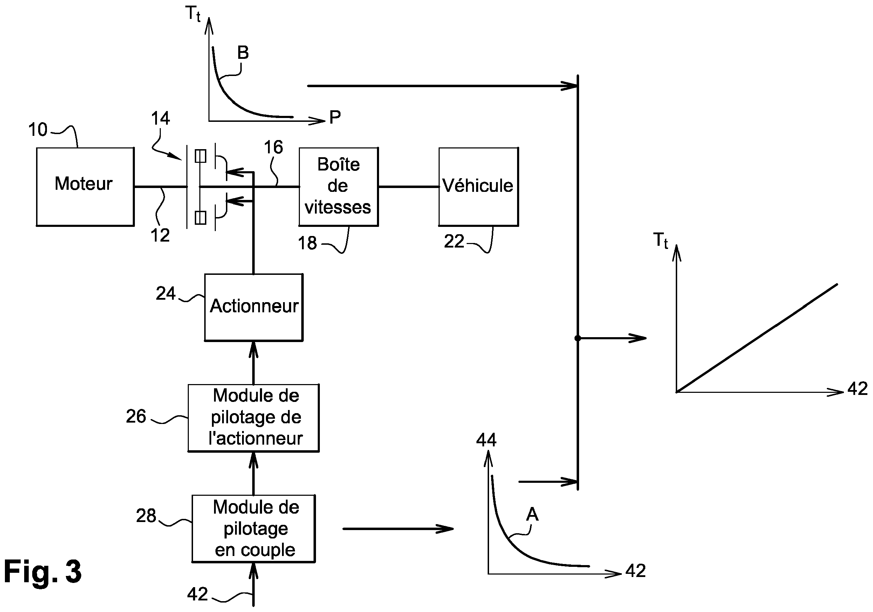

La figure 3 est une illustration schématique des caractéristiques essentielles du dispositif selon l'invention.

Le module de pilotage en couple 28, qui reçoit un signal 42 de consigne de couple transmissible par l'embrayage et qui génère un signal 44 de consigne d'un paramètre de commande appliqué au module 26 de pilotage de l'actionneur, génère ce signal 44 à partir d'une courbe apprise A qui est une courbe de variation du signal de consigne du paramètre de commande de l'embrayage 14 en fonction du signal 42, c'est-à-dire du couple transmissible désiré. Cette courbe A est l'inverse de la courbe B de variation du couple Tt qui est transmis par l'embrayage en fonction de son paramètre de commande P, qui est par exemple la position de la butée d'embrayage.

On voit que cette courbe B n'est pas une variation linéaire du paramètre de commande P et que sa pente varie entre ses extrémités d'une valeur faible à une valeur élevée. En outre, cette courbe B varie d'un véhicule à l'autre en raison des dispersions de fabrication des composants de l'embrayage, elle varie également en fonction du temps, en raison des variations de température de ses composants, de leur degré d'usure, des caractéristiques des composants du mécanisme d'embrayage, etc...

L'avantage essentiel du dispositif selon l'invention est de linéariser la commande de l'embrayage grâce à l'utilisation dans le module de pilotage 28 d'une courbe caractéristique A qui est l'inverse de la courbe caractéristique B de fonctionnement de l'embrayage. Cette combinaison en série des deux courbes caractéristiques permet d'obtenir, comme représenté en partie droite de la figure 3, une caractéristique C de variation linéaire du couple Tt transmis par l'embrayage en fonction du couple transmissible désiré, c'est-à-dire du signal 42 de consigne de couple transmissible par l'embrayage.

Le pilotage du confort, représenté par la courbe du couple ou de l'accélération lors de la manoeuvre de l'embrayage est ainsi plus simple, plus performant et réalisable en temps réel.

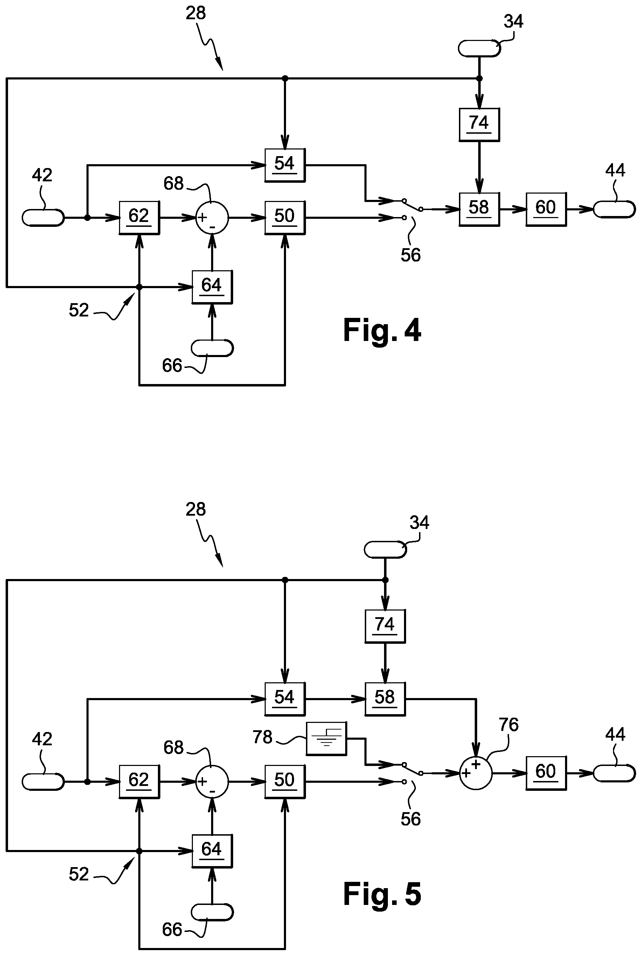

La courbe caractéristique A utilisée par le module 28 de pilotage en couple est une courbe apprise, déterminée par calcul à partir de valeurs mesurées ou estimées du couple transmis Tt et du paramètre de commande P et d'un modèle mathématique simple de la courbe caractéristique, ce qui permet de suivre l'évolution de cette courbe caractéristique et de prendre en compte les variations des paramètres qui la déterminent, comme cela sera décrit plus en détail dans ce qui suit en référence aux figures 4 et suivantes.

La figure 4 représente un premier mode de réalisation du module 28 de pilotage en couple d'un embrayage 14, ce module 28 permettant une régulation en couple avec linéarisation du fonctionnement de l'embrayage sans pré-positionnement, c'est-à-dire que le signal de sortie 44 de ce module en mode régulation ne dépend pas directement du signal de consigne 42, mais dépend de l'écart entre ce signal de consigne et la mesure à travers un circuit de correction 50 qui va être décrit dans ce qui suit.

Le module de pilotage 28 de la figure 4 comprend un circuit de régulation 52 en parallèle avec un circuit 54 de mise en forme en boucle ouverte de la consigne, les sorties des circuits 52 et 54 étant reliées à des moyens de sélection 56 dont la sortie est reliée à des moyens 58 de détermination d'une consigne de paramètre de commande de l'embrayage, la sortie des moyens 58 étant reliée à des moyens 60 de mise en forme fournissant le signal 44 de consigne appliqué au module 26 de pilotage de l'actionneur 24 de l'embrayage.

Le circuit de régulation 52 comprend des moyens 62 de mise en forme et de traitement recevant le signal de consigne 42 fourni par le module 30 de supervision de la transmission, des moyens 64 de mise en forme et de traitement recevant en entrée un signal 66 estimé ou mesuré en temps réel du couple transmis par l'embrayage 14, des moyens 68 de calcul de l'écart entre la consigne de couple transmissible et la mesure ou l'estimation du couple transmis par l'embrayage, et le correcteur précité 50.

Les moyens 62 de traitement et de mise en forme peuvent comprendre des moyens de mise à l'échelle du signal de consigne 42, par exemple une normalisation par rapport au couple moteur maximal, permettant de rendre le dispositif indépendant d'un véhicule déterminé et donc de faciliter l'accord des paramètres d'une gamme de véhicules à une autre.

Ces moyens 62 comprennent éventuellement un filtre numérique qui permet d'amplifier ou de réduire certaines fréquences pour adapter le pilotage en couple à la stratégie d'accouplement-désaccouplement du moteur et de la boîte de vitesses qui est utilisée. Ce filtre peut être l'élément R d'un correcteur RST permettant de placer les pôles du système d'embrayage asservi de manière à garantir une réponse dynamique optimale dépourvue d'instabilité ou de phénomènes oscillants préjudiciables au confort, à l'agrément de conduite du véhicule et à la tenue mécanique des organes de la transmission et de ses moyens de pilotage.

Les moyens 64 de mise en forme et de traitement peuvent comprendre des moyens de mise à l'échelle du signal 66 de mesure ou d'estimation du couple transmis par l'embrayage, par exemple pour une normalisation par rapport au couple moteur maximal de façon à être indépendant d'un véhicule particulier et faciliter l'accord des paramètres d'une gamme de véhicules à une autre. Ces moyens 64 peuvent éventuellement comprendre un filtre numérique, permettant d'amplifier ou de réduire certaines fréquences pour adapter le pilotage en couple à la stratégie d'accouplement-désaccouplement du moteur et de la boîte de vitesses qui est utilisée, ce filtre pouvant être l'élément S d'un correcteur RST permettant de placer les pôles de l'embrayage asservi pour garantir une réponse dynamique optimale dépourvue d'instabilité ou de phénomènes oscillants précités.

Le circuit 54 de mise en forme en boucle ouverte comprend des moyens de mise à l'échelle du signal de consigne 42, par exemple pour une normalisation par rapport au couple moteur maximum, permettant d'être indépendant d'un véhicule particulier et de faciliter l'accord des paramètres d'une gamme de véhicules à une autre. Le circuit 54 peut aussi comprendre un filtre numérique permettant d'amplifier ou de réduire certaines fréquences pour adapter le pilotage en couple à la stratégie utilisée pour l'accouplement-désaccouplement du moteur et de la boîte de vitesses.

Le correcteur 50 reçoit du comparateur 68 un signal d'erreur entre la consigne de couple transmissible et le couple transmis, et calcule la correction à apporter pour obtenir le couple désiré.

Le correcteur 50 peut être constitué d'un correcteur P (proportionnelle) ou d'un correcteur PI (proportionnelle-intégrale) numérique et supportant un pré-positionnement et/ou une dé-saturation de son intégrateur, ou un correcteur PI2 (proportionnelle-intégrale-intégrale) numérique et supportant un pré-positionnement et /ou une dé-saturation de ses intégrateurs, ou un correcteur PID (proportionnelle-intégrale-dérivée) numérique à dérivée filtrée, supportant un pré-positionnement et/ou une dé-saturation de son intégrateur, ou un régulateur à dérivateur d'ordre non entier de type CRONE, ou de l'élément T d'un correcteur RST discrétisé, ou d'un filtre numérique, ce correcteur 50 permettant d'amplifier ou de réduire certaines fréquences pour adapter le pilotage en couple à la stratégie d'accouplement-désaccouplement du moteur et de la boîte de vitesses qui est utilisée.

Ce correcteur sert également à placer les pôles de l'embrayage asservi de manière à garantir une réponse dynamique optimale dépourvue d'instabilité ou de phénomènes oscillants précités.

Les moyens de sélection 56 servent à débrayer le circuit de régulation 52 avant ou après une opération de manoeuvre de l'embrayage au moyen de signaux envoyés par le module 30 de supervision de la transmission suivant les diverses phases de pilotage de la transmission pour des opérations de désaccouplement du moteur et de la boîte de vitesses, cette sélection permettant :

- d'avoir un gain de temps sur la réactivité du dispositif, par exemple pour éviter le calage du moteur 10,
- de découpler les régulations des deux embrayages 14 sur une boîte de vitesses à deux arbres d'entrée parallèles, quand on bascule d'un embrayage à l'autre lors des changements de rapports.

Le dispositif qui accouple le moteur et la boîte de vitesses est toujours en régulation en boucle fermée tandis que le dispositif qui désaccouple le moteur et la boîte de vitesses est toujours en boucle ouverte.

Le couple fourni par les moyens de sélection 56 est transformé par les moyens 58 en paramètre de commande de l'embrayage et est envoyé après traitement par les moyens 60 comme signal de consigne 44 du paramètre de commande de l'embrayage au module 26 de pilotage de l'actionneur 24.

Les moyens 58 qui servent à déterminer le paramètre de commande de l'embrayage en fonction du couple que l'on désire transmettre servent également à linéariser le fonctionnement de l'embrayage et de sa commande, ce qui permet une synthèse du correcteur 50 et une commande plus performante en terme de robustesse et de rapidité.

L'effet de non-linéarité de la relation entre la commande de l'embrayage 14 et le couple transmissible par l'embrayage est celui d'une variation locale du gain de la fonction de transfert écart de sortie du comparateur 68 entre la consigne de couple 42 et la mesure ou l'estimation du couple transmis 66 sur le couple transmissible par l'embrayage 14 en fonction du paramètre de commande de l'embrayage.

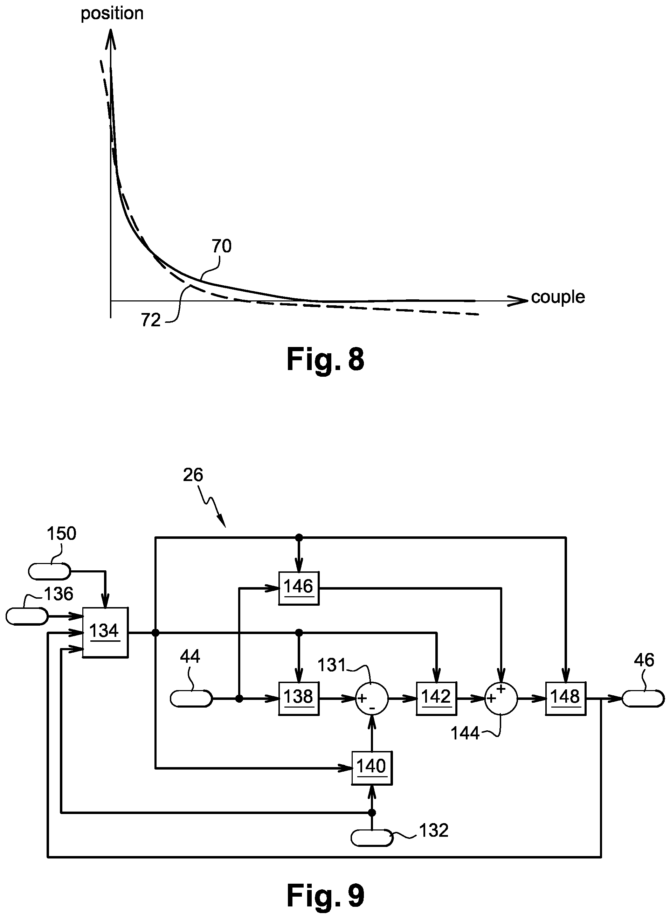

La figure 8 représente une courbe caractéristique 70 typique de la variation du paramètre de commande de l'embrayage (par exemple la position de la butée d'embrayage) en fonction du couple transmissible par l'embrayage.

On voit sur cette courbe que la pente de la caractéristique 70 varie fortement d'un point à l'autre de la courbe.

En général, on ne connaît pas la courbe réelle 70 de variation du paramètre de commande en fonction du couple transmissible par l'embrayage, cette courbe variant de plus dans le temps. Par exemple, dans le cas d'un embrayage à friction à sec, le couple transmissible dépend de la caractéristique de la charge exercée sur le plateau de pression en fonction de la position de la butée d'embrayage, du coefficient de frottement du matériau de friction sur le matériau du plateau de pression et du plateau de réaction et de la géométrie des garnitures de friction.

Ce coefficient de frottement dépend de l'état des surfaces en contact et de leur température. La charge appliquée sur le plateau de friction dépend de l'épaisseur de la friction et donc de l'usure et de la progressivité de cette friction (élasticité) et du mécanisme d'embrayage (raideur du diaphragme annulaire et des doigts radiaux du diaphragme).

Une solution idéale serait de pouvoir mesurer directement le couple transmissible par l'embrayage. Toutefois, ce couple transmissible n'est observable que pendant les phases de glissement de l'embrayage. En particulier, les points de la courbe 70 à fort couple transmis ne sont pas observables car on ne peut maintenir en ces points l'embrayage en état de glissement.

Cependant, si l'on ne connaît pas exactement la courbe 70 de variation représentée en figure 8, on connaît l'allure générale de cette courbe et on peut l'approcher au moyen d'un modèle mathématique simple monotone comprenant un certain nombre de paramètres. Il suffit alors de mesurer quelques points de la courbe caractéristique pour pouvoir extrapoler toute cette courbe sans se soucier de sa continuité et de sa dérivée entre ses différents points.

On utilise des moyens d'estimation en temps réel du couple transmis par l'embrayage et des moyens de détermination ou de mesure de la vitesse de glissement de l'embrayage. Pendant une opération d'embrayage et tant que l'on observe un glissement de l'embrayage, on mesure ou l'on estime des couples de valeurs du paramètre de commande de l'embrayage et du couple transmissible en valeur absolue et en temps réel, on construit deux normes pour les fonctions mathématiques donnant le paramètre de commande en fonction du couple transmissible et le couple transmissible en fonction du paramètre de commande, ces deux normes mesurant l'écart entre le modèle mathématique et l'échantillon de mesure, on cherche les paramètres qui minimisent ces normes en effectuant l'annulation des dérivations partielles des normes, on obtient ainsi deux systèmes d'équation linéaires à N inconnues, N étant le nombre de paramètres du modèle mathématique de la courbe, et l'on résout ces systèmes d'équations linéaires pour déterminer les meilleurs paramètres.

En variante, on peut ne construire qu'une des deux normes précitées et minimiser cette norme en annulant ses dérivations partielles.

Un avantage important de l'utilisation d'un modèle mathématique simple de la courbe précitée est que l'on peut travailler avec un nombre de paramètres réduit, de 4 ou 5 par exemple, au lieu de 30 ou davantage, ce qui permet de faire les calculs nécessaires en temps réel.

On peut par exemple utiliser des modèles polynomiaux d'ordre 4 pour les fonctions mathématiques donnant le paramètre de commande en fonction du couple transmissible et le couple transmissible en fonction du paramètre de commande.

On procède pour le calcul de la façon suivante : On attend le début d'une nouvelle opération d'embrayage pour mesurer les paramètres nécessaires (couple transmis par l'embrayage et paramètre de commande, par exemple position de la butée d'embrayage), on effectue les calculs nécessaires, notamment de l'énergie dissipée dans l'embrayage (qui correspond au glissement de l'embrayage), on vérifie si l'embrayage est toujours glissant et dans ce cas on continue les mesures des paramètres, ou bien si l'embrayage est terminé, auquel cas l'on procède à un test sur l'énergie dissipée dans l'embrayage pour vérifier son niveau par rapport à des valeurs limites supérieure et inférieure.

Si l'énergie dissipée est supérieure à la valeur limite supérieure ou inférieure à la valeur limite inférieure, on efface les mesures et on attend une nouvelle opération d'embrayage pour les recommencer. Si l'énergie dissipée est comprise entre les valeurs limites supérieure et inférieure, on procède à un test sur le nombre de valeurs mesurées que l'on compare à un seuil. Si le seuil n'est pas atteint, on ajoute les valeurs mesurées aux mesures précédentes. Si le seuil est atteint, on calcule les paramètres qui minimisent les normes précitées. Ce calcul peut être fait à partir des formules donnant le paramètre de commande en fonction du couple transmissible et le couple transmis en fonction du paramètre de commande, ou bien on peut calculer, à partir de ces formules, des ordonnées correspondant à des points d'abscisses fixes prédéterminés pour régénérer une table d'interpolation linéaire, ce qui a l'avantage de réduire la complexité des calculs effectués en temps réel.

On obtient ainsi une courbe caractéristique apprise désignée par la référence 72 en figure 8 et représentée en pointillés, qui diffère peu de la courbe caractéristique réelle 70.

Les moyens de calcul correspondants sont désignés par la référence 74 en figure 4 et fournissent cette courbe caractéristique apprise aux moyens 58 de détermination précités, en fonction des informations 34 nécessaires, qui sont prélevées sur le moteur et/ou sur son système de pilotage 32, sur la boîte de vitesses et sur le reste du véhicule et qui sont appliquées également aux moyens 62 et 64 précités, ainsi qu'au circuit 54 de mise en forme du signal de consigne 42 en boucle ouverte ou en anticipation.

La variante de réalisation du module de pilotage en couple 28 qui est représentée en figure 5 permet une régulation avec un pré-positionnement, sans linéarisation du correcteur 50, c'est-à-dire que le signal de consigne 44 du paramètre de commande 44 de l'embrayage dépend en partie directement du signal 42 de consigne de couple transmissible, le correcteur 50 corrigeant les écarts autour d'une valeur du paramètre de commande de l'embrayage donnée par les moyens de détermination 58 précités.

On retrouve dans cette variante de réalisation le circuit de régulation 52 et le circuit de mise en forme 54 décrits en référence à la figure 4, mais la sortie du circuit 54 de mise en forme en boucle ouverte est appliquée à l'entrée des moyens 58 de détermination du paramètre de commande de l'embrayage en fonction du couple transmissible par l'embrayage, la sortie des moyens 58 étant reliée à une entrée d'un sommateur d'effets 76 dont une autre entrée est reliée par le sélecteur 56 soit à la sortie du correcteur 50 du circuit de régulation 52, soit à des moyens 78 de neutralisation du circuit de régulation 52.

Le pré-positionnement qui est réalisé par le circuit 54 et le sommateur d'effets 76 est un lien direct entre une grandeur de consigne et une grandeur de commande dans un système régulé. Il permet d'augmenter les performances dynamiques du système en anticipant sur la valeur de commande qui est ici le couple transmissible par l'embrayage.

Le correcteur 50 n'a plus alors qu'à corriger des variations faibles autour du pré-positionnement, ce qui permet d'augmenter sa bande passante et donc ses performances dynamiques.

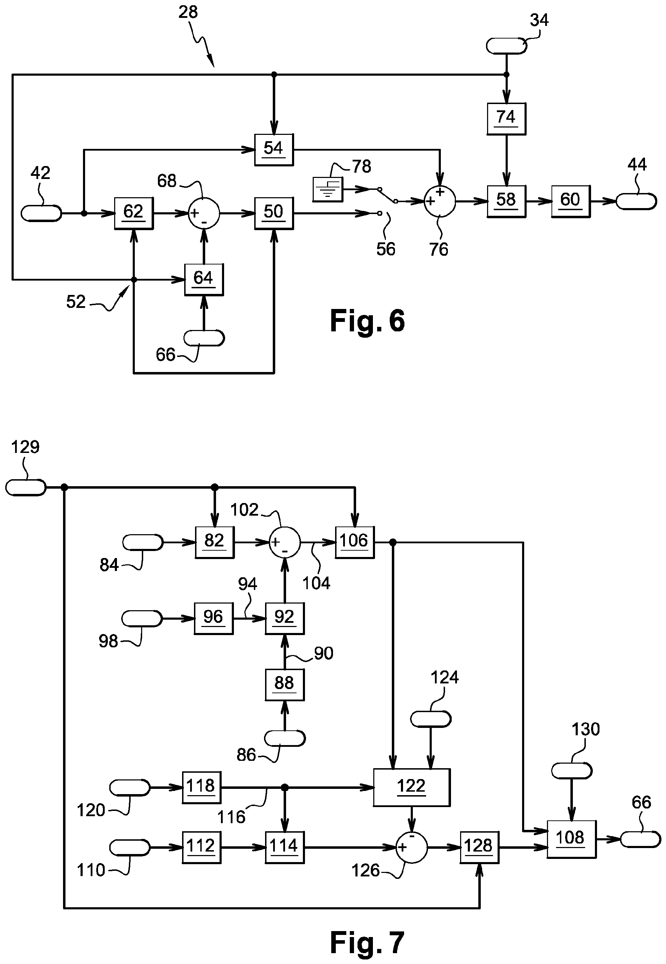

La variante de réalisation du module 28 de pilotage en couple qui est représentée en figure 6 permet une régulation avec un pré-positionnement et une linéarisation du correcteur 50, c'est-à-dire que le couple désiré fourni par le sommateur d'effets 76 dépend pour partie directement du signal 42 de consigne de couple transmissible, le correcteur 50 corrigeant les écarts par rapport à la valeur mesurée ou estimée 66 du couple transmis par l'embrayage.

Dans cette variante de réalisation, le sommateur d'effets 76 est entre le sélecteur 56 qui reçoit en entrée le signal de sortie du circuit de régulation 52 et le signal fourni par les moyens de neutralisation de ce circuit de régulation, et l'entrée des moyens 58 de détermination du paramètre de commande de l'embrayage en fonction de la consigne de couple transmissible, la sortie du circuit de mise en forme en boucle ouverte 54 étant reliée à une entrée du sommateur 76 dont l'autre entrée est reliée à la sortie du sélecteur 56 comme déjà indiqué.

Les moyens d'estimation du couple transmis par l'embrayage sont représentés schématiquement en figure 7.

Ces moyens ont pour fonction de fournir les valeurs du couple transmis en temps réel à partir de mesures pour permettre au circuit de régulation 52 précité de compenser les effets d'écart entre le modèle mathématique et la courbe réelle dans les moyens de détermination 58 précités et les effets dus aux variations à court terme telles par exemple que la température de l'embrayage 14.

On peut déterminer le couple transmis par l'embrayage à partir de l'équation du couple moteur et de l'équation de charge du véhicule qui sont indiqués ci-dessous.

L'équation du couple moteur est :

$$Je.d\omega e/dt = Te - Tt - fe.\omega e$$

où :

. Je est l'inertie du moteur 10,
. Te est le couple produit par le moteur diminué du couple des accessoires,
. Tt est le couple transmis par l'embrayage,
. fe est le frottement visqueux équivalent de l'équipage mobile du moteur,
. $\omega e$ est la vitesse de rotation de l'arbre de sortie du moteur.

L'équation de la charge du véhicule est :

$$Jv.d\omega_v/dt = Tt - T_1 - fv \cdot \omega v - fdv.\omega_v{}^2$$

où :

. Jv est l'inertie du véhicule,

. fv est le frottement visqueux équivalent de la transmission ramené à l'entrée de la boîte de vitesses,

. $T_1$ est le couple équivalent à la charge du véhicule (résistance au roulement, pente de la route, etc...),

. fdv est le frottement aérodynamique du véhicule ramené à l'entrée de la boîte de vitesses,

. ωv est la vitesse de rotation à l'entrée de la boîte de vitesses.

La première équation permet de déterminer le couple transmis quand l'information sur le couple moteur Te est disponible, c'est-à-dire quand le moteur thermique tourne.

La seconde équation permet de déterminer le couple transmis par l'embrayage quand le véhicule est en mouvement, que le moteur du véhicule soit à l'arrêt ou non.

L'utilisation combinée de ces deux équations permet d'avoir une information de couple transmis par l'embrayage qui est disponible dans la quasi-totalité des opérations de manoeuvre de l'embrayage.

En variante, on peut aussi combiner les deux équations précitées en éliminant le couple Tt transmis par l'embrayage et faire ensuite les calculs sur une seule équation, ce qui permet d'identifier tous les paramètres du système en une seule fois.

Les moyens d'estimation représentés schématiquement en figure 7 comprennent des moyens 82 de mise à l'échelle et de filtration du couple moteur 84 mesuré ou estimé par le système de contrôle moteur. La vitesse de rotation 86 du moteur est mise à l'échelle et filtrée par des moyens 88 pour fournir l'accélération en rotation 90 du moteur. Des moyens 92 multiplient cette accélération par l'inertie 94 du moteur fournie par des moyens 96 à partir de signaux 98 de commande et de données nécessaires à l'apprentissage de l'inertie du volant moteur et du mécanisme d'embrayage.

La sortie des moyens 92 fournit un couple dynamique 100 du moteur qui est retranché par un soustracteur 102 au couple statique fourni par les moyens 82, pour fournir un couple 104 transmis par l'embrayage et vu du côté moteur. Ce signal peut être à nouveau filtré par des moyens 106 avant d'être utilisé dans un sélecteur-combineur 108 comme décrit dans ce qui suit.

La vitesse du véhicule peut être mesurée en différents endroits (sur l'arbre primaire ou secondaire de la boîte de vitesses, sur le pont de la transmission ou sur le différentiel, sur les roues du véhicule, etc...) et cette vitesse 110 est filtrée au moyen d'un filtre dérivateur associé à un filtre passe-bas dans des moyens 112 pour éliminer des effets indésirables des pôles et des zéros de la fonction de transfert accélération au point de mesure de la vitesse sur le couple transmis. L'accélération du véhicule est multipliée, dans des moyens 114, par l'inertie 116 du véhicule ramenée à l'arbre d'entrée de la boîte de vitesses, cette inertie étant fournie par des moyens d'apprentissage 118 recevant en entrée les signaux nécessaires 120.

Cette inertie est également appliquée à des moyens 122 d'estimation de la charge du véhicule qui reçoivent également en entrée des signaux nécessaires 124 ainsi que le couple transmis par l'embrayage vu du côté moteur.

Les sorties des moyens 114 et 122 sont appliquées à un soustracteur 126 dont la sortie fournit le couple transmis par l'embrayage vu du côté véhicule. Ce couple est mis à l'échelle et éventuellement filtré par des moyens 128. La référence 129 désigne les signaux servant à l'adaptation des paramètres ou au calcul par les moyens 82, 106 et 128.

Le sélecteur-combineur 108 permet, en fonction de signaux de commande 130, soit de choisir le couple transmis par l'embrayage vu du côté moteur, fourni par les moyens 106, soit de choisir le couple transmis par l'embrayage vu du côté véhicule fourni par les moyens 128, soit encore d'effectuer une combinaison linéaire de ces deux couples transmis, pour fournir un signal de couple transmis estimé 66 qui est utilisé dans le circuit de régulation 52 du module 28 de pilotage en couple.

Un mode de réalisation du module 26 de pilotage de l'actionneur 24 est représenté schématiquement en figure 9.

La réponse dynamique et la précision de cet actionneur sont affectées par des grandeurs physiques telles que la température, la tension électrique d'alimentation, les effets de l'usure et du vieillissement des composants internes de l'actionneur et de la commande de l'embrayage 14. La variabilité engendrée par l'actionneur imposerait au circuit de régulation 52 du module 28 de pilotage en couple de corriger les écarts de réponse du système complet, ce qui diminuerait l'efficacité de ce circuit de régulation.

Le module 26 de pilotage de l'actionneur est chargé de compenser les variations du processus physique d'actionnement et de commande de l'embrayage.

Le module 28 de pilotage de l'embrayage fournit un signal de consigne 44 du paramètre de commande de l'embrayage, qui est comparé par un comparateur 131 à une mesure ou une estimation 132 de ce paramètre de commande, obtenue à partir de mesures de ce paramètre sur l'embrayage 14.

Des moyens de régulation permettent de déterminer la meilleure valeur du signal de commande 46 de l'actionneur pour annuler l'écart entre la consigne 44 et la mesure 132 en minimisant le temps pris par l'actionneur 24 pour annuler cet écart.

Les paramètres des moyens de régulation sont ajustés par un circuit 134 qui prend en compte le vieillissement des dispersions de fabrication et des grandeurs physiques d'environnement 136 susceptibles de perturber le fonctionnement de l'actionneur 24.

Plus précisément, le module 26 de pilotage de l'actionneur représenté en figure 9 comprend des moyens 138 de mise à l'échelle et de filtrage du signal 44 de consigne de paramètre de commande, dont la sortie est appliquée à une entrée du comparateur 131 dont l'autre entrée reçoit une valeur mesurée 132 du paramètre de commande après traitement par des moyens 140 de mise à l'échelle et de filtrage.

La sortie du comparateur 131 est reliée à une entrée d'un correcteur 142 dont une autre entrée reçoit le signal de sortie des moyens 134 précités. La sortie du correcteur 142 est reliée à une entrée d'un sommateur 144 dont une autre entrée reçoit un signal de sortie d'un circuit 146 d'anticipation de la valeur du signal de commande de l'actionneur en fonction du signal de consigne 44 fourni par le module 28 précité. La sortie du sommateur 144 est traitée par des moyens 148 de mise à l'échelle pour fournir le signal 46 de commande de l'actionneur, qui est également appliqué à une entrée des moyens 134 précités.

Des signaux de contrôle 150 nécessaires sont également appliqués à ces moyens 134.

Le signal de sortie des moyens 146 est une anticipation du signal de commande de l'actionneur 24 et est ajouté à la sortie du correcteur 142 par le sommateur 144. Cette anticipation permet de positionner directement la commande de l'actionneur avec une grande rapidité. Le correcteur 142 vient ensuite ajuster la valeur de la commande pour compenser les erreurs de modèle, les perturbations et les dispersions.

Quand l'actionneur 24 est un vérin électromécanique qui déplace une butée d'embrayage et qui est commandé par un moteur électrique piloté en courant, l'anticipation permet de donner une consigne de courant minimum pour déplacer la butée d'embrayage en fonction de la consigne de position de butée à atteindre, au lieu d'attendre qu'un intégrateur du correcteur 142 monte lentement à la bonne valeur.

Quand l'actionneur 24 est un distributeur de fluide commandé par une électrovanne, l'anticipation permet d'appliquer une tension électrique plus importante pour commander l'ouverture de l'électrovanne plus rapidement, le correcteur 142 venant corriger le débit ou la pression du fluide pour atteindra ou maintenir la position de la butée d'embrayage.

## Revendications

1. Dispositif adaptatif piloté d'accouplement entre un moteur (10) et une boîte de vitesses (18) dans un véhicule automobile, ce dispositif comprenant un embrayage (14), un actionneur (24) de commande de l'embrayage, et des moyens de commande de l'actionneur (24), **caractérisé en ce qu'**il est partagé en plusieurs modules de pilotage destinés à compenser en cascade les dispersions des divers composants de la transmission du véhicule et qui comprennent :

   - un module (30) de supervision de la transmission, mettant en oeuvre des stratégies de gestion de l'agrément de conduite qui pilotent l'embrayage (14) en couple et/ou le moteur (10) du véhicule en vitesse et/ou en couple et qui sont destinées à compenser la variabilité du comportement dynamique du moteur (10), de la boîte de vitesses (18) et du reste du véhicule (22),
   - un module (28) de pilotage de l'embrayage (14) en couple, qui détermine une valeur (44) de consigne d'une grandeur physique de commande de l'embrayage pour obtenir un couple transmissible souhaité dans l'embrayage en fonction d'une consigne (42) de couple à transmettre, délivrée par le module (30) de supervision de la transmission, et de divers signaux de grandeurs physiques, d'état ou de commande qui sont mesurés sur le moteur, sur la boîte de vitesses et sur le reste du véhicule,
   - et un module (26) de pilotage de l'actionneur (24) de l'embrayage, qui commande l'actionneur pour obtenir une grandeur physique de commande de l'embrayage en fonction d'une consigne (44) fournie par le module (28) de pilotage en couple de l'embrayage et de divers signaux de grandeurs physiques, d'état ou de commande qui sont mesurés sur le moteur, sur la boîte de vitesses et sur le reste du véhicule,

   le module (28) de pilotage en couple de l'embrayage comprend un circuit de régulation (52) recevant le signal de consigne (42) du couple transmissible par l'embrayage et une mesure ou une estimation (66) du couple réellement transmis par l'embrayage et générant un signal d'écart appliqué à un circuit de correction (50) et

   le dispositif comprend, en parallèle avec le circuit de régulation (52) un circuit (54) de mise en forme en boucle ouverte recevant le signal de consigne (42) de couple transmissible, ce circuit de mise en forme (54) comprenant des moyens de mise à l'échelle, par exemple pour une normalisation du signal de consigne (42) de couple transmissible par rapport à un couple moteur maximal et éventuellement un filtre numérique pour l'amplification ou la réduction de certaines fréquences et l'adaptation du pilotage en couple à une stratégie d'accouplement-désaccouplement du moteur et de la boîte de vitesses.

2. Dispositif selon la revendication 1, **caractérisé en ce que** le module (28) de pilotage en couple de l'embrayage comprend des moyens (58) de détermination d'une consigne (44) du paramètre de commande de l'embrayage à partir d'une courbe apprise (72) de variation de ladite consigne du paramètre de commande en fonction de la consigne de couple transmissible par l'embrayage.

3. Dispositif selon la revendication 2, **caractérisé en**

ce qu'il comprend des moyens (74) de calcul de la courbe (72) de variation de la consigne de paramètre de commande de l'embrayage en fonction du signal de consigne (42) du couple transmissible par l'embrayage, ces moyens de calcul (74) étant reliés aux moyens de détermination (58) précités et recevant en entrée des valeurs réelles du paramètre de commande de l'embrayage et du couple transmis par l'embrayage, ces valeurs étant mesurées ou estimées pendant les phases de glissement de l'embrayage.

4. Dispositif selon la revendication 3, **caractérisé en ce que** lesdits moyens de calcul (74) comprennent un modèle mathématique de la courbe de variation précitée et des moyens de mise à jour des paramètres de ce modèle en fonction des variations mesurées ou estimées du paramètre de commande de l'embrayage et du couple transmis par l'embrayage, permettant de tenir des évolutions à long terme de l'embrayage, telles par exemple que son usure.

5. Dispositif selon la revendication 4, **caractérisé en ce que** les moyens de calcul (74) sont conçus pour déterminer au moins une norme qui mesure l'écart entre des valeurs mesurées de couple et de paramètre de commande et une fonction mathématique de variation du couple en fonction du paramètre de commande ou de variation du paramètre de commande en fonction du couple, et pour minimiser cette norme en recherchant les valeurs de ses paramètres qui annulent ses dérivées partielles.

6. Dispositif selon l'une des revendications 2 à 5, **caractérisé en ce que** le circuit de régulation (52) du module (28) de pilotage en couple prend en compte les variations à court terme des caractéristiques de l'embrayage, telles que celles dues aux variations de température, et les défauts de modélisation de la courbe (72) de variation du paramètre de commande de l'embrayage en fonction du signal de consigne de couple transmissible par l'embrayage.

7. Dispositif selon l'une des revendications précédentes, **caractérisé en ce que** le circuit de correction (50) est un correcteur du type P (proportionnelle) ou PI (proportionnelle-intégrale) numérique ou PI2 (proportionnelle-intégrale-intégrale) numérique, ou PID (proportionnelle-intégrale-dérivée) numérique à dérivée filtrée, ou un régulateur à dérivateur d'ordre non entier de type CRONE, ou un élément d'un correcteur RST discrétisé ou un filtre numérique.

8. Dispositif selon l'une des revendications 2 à 7, **caractérisé en ce que** les signaux de sortie du circuit (54) de mise en forme en boucle ouverte et du circuit (52) de régulation sont appliqués à des moyens de sélection (56) qui transmettent l'un de ces signaux de sortie aux moyens (58) de détermination d'une consigne correspondante du paramètre de commande de l'embrayage.

9. Dispositif selon la revendication 8, **caractérisé en ce que** les moyens de sélection (56) sont destinés à bloquer la transmission du signal de sortie du circuit de régulation (52) pour accélérer la réponse du dispositif, par exemple pour éviter le calage du moteur (10), et/ou pour découpler les régulations dans le cas d'une boîte de vitesses (18) à deux arbres d'entrée (16) parallèles et deux embrayages (14) de liaison de ces arbres d'entrée à l'arbre de sortie du moteur (10).

10. Dispositif selon l'une des revendications 2 à 9, **caractérisé en ce que** la sortie des moyens de détermination (58) est reliée par des moyens de mise en forme (60) au module (26) de pilotage de l'actionneur.

11. Dispositif selon l'une des revendications 2 à 7, **caractérisé en ce que** la sortie du circuit (54) de mise en forme en boucle ouverte est reliée aux moyens (58) de détermination d'une consigne du paramètre de commande de l'embrayage à partir d'une courbe apprise (72) de variation de cette consigne en fonction du signal de consigne (42) de couple transmissible par l'embrayage, les signaux de sortie de ces moyens de détermination (58) et du circuit de régulation (52) étant appliqués à un sommateur d'effets (76) reliés par des moyens (60) de mise en forme au module (26) de pilotage de l'actionneur.

12. Dispositif selon la revendication 11, **caractérisé en ce que** la sortie du circuit de régulation (52) est appliquée à une entrée du sommateur d'effets (76) par l'intermédiaire de moyens de sélection (56) permettant de bloquer le signal de sortie de ce circuit de régulation.

13. Dispositif selon l'une des revendications 2 à 7, **caractérisé en ce que** le signal de sortie du circuit (54) de mise en forme en boucle ouverte est appliqué à une entrée d'un sommateur d'effets (76) dont une autre entrée reçoit le signal de sortie du circuit de régulation (52) par l'intermédiaire des moyens de sélection (56) permettant de neutraliser ce circuit de régulation (52), la sortie du sommateur d'effets (76) étant reliée aux moyens (58) de détermination d'une consigne de paramètre de commande de l'embrayage à partir d'une courbe apprise (72) de variation de cette consigne en fonction du signal de consigne (42) de couple transmissible par l'embrayage.

14. Dispositif selon la revendication 13, **caractérisé en ce que** la sortie desdits moyens de détermination (58) est reliée par des moyens de mise en forme (60) au module (26) de pilotage de l'actionneur.

15. Dispositif selon l'une des revendications précédentes, **caractérisé en ce qu'**il comprend des moyens d'estimation en temps réel du couple transmis par l'embrayage, ces moyens comprenant des moyens de calcul du couple transmis par l'embrayage à partir des équations de couple moteur et de charge du véhicule et d'une mesure ou d'une estimation du couple moteur, de la vitesse moteur, de la vitesse du véhicule, de la charge du véhicule et de l'inertie du véhicule.

16. Dispositif selon la revendication 15, **caractérisé en ce qu'**il comprend des moyens de calcul du couple transmis vu du côté moteur, des moyens de calcul du couple transmis vu du côté boîte de vitesses, et des moyens (102) de sélection de l'un ou de l'autre des couples calculés ou de combinaison linéaire de ces deux couples pour l'obtention d'un couple transmis estimé (66) appliqué au circuit de régulation (52) du module (28) de pilotage en couple.

17. Dispositif selon la revendication 15 ou 16, **caractérisé en ce qu'**il comprend des moyens d'apprentissage de l'inertie moteur et du frottement visqueux équivalent de l'équipage mobile du moteur pendant des phases de pilotage du moteur où le couple transmis par l'embrayage est nul, et des moyens d'apprentissage de l'inertie du véhicule, du frottement visqueux équivalent de la transmission ramenée à l'entrée de la boîte de vitesses et de la charge du véhicule pendant les phases de déplacement en roue libre du véhicule où le couple transmis par l'embrayage est nul.

18. Dispositif selon la revendication 15 ou 16, **caractérisé en ce qu'**il comprend des moyens de calcul des inerties du moteur et du véhicule, des frottements visqueux équivalents du moteur et de la transmission du véhicule, et de la charge du véhicule à partir de mesures des vitesses de rotation du moteur et de l'entrée de la boîte de vitesses et du couple produit par le moteur diminué du couple des accessoires.

19. Dispositif selon l'une des revendications précédentes, **caractérisé en ce que** la boîte de vitesses (18) comprend deux arbres d'entrée parallèles (16) reliés chacun par un embrayage (14) à l'arbre de sortie (12) du moteur (10), chaque embrayage (14) étant commandé par un actionneur (24) piloté par un dispositif précité comprenant un module (26) de pilotage d'actionneur et un module (28) de pilotage en couple de l'embrayage.

**Patentansprüche**

1. Gesteuerte adaptive Kupplungsvorrichtung zwischen einem Motor (10) und einem Schaltgetriebe (18) in einem Kraftfahrzeug, wobei diese Vorrichtung eine Kupplung (14), einen Stellantrieb (24) zur Steuerung der Kupplung und Steuereinrichtungen des Stellantriebs (24) enthält, **dadurch gekennzeichnet, dass** sie in mehrere Steuermodule aufgeteilt ist, die dazu bestimmt sind, in Kaskade die Streuungen der verschiedenen Bestandteile des Antriebs des Fahrzeugs zu kompensieren und die enthalten:

   - ein Überwachungsmodul (30) des Antriebs, das Verwaltungsstrategien des Fahrverhaltens anwendet, die das Drehmoment der Kupplung (14) und/oder die Drehzahl und/oder das Drehmoment des Motors (10) des Fahrzeugs steuern und die dazu bestimmt sind, die Veränderlichkeit des dynamischen Verhaltens des Motors (10), des Schaltgetriebes (18) und des Rests des Fahrzeugs zu kompensieren (22),
   - ein Steuermodul (28) des Drehmoments der Kupplung (14), das einen Sollwert (44) einer physikalischen Steuergröße der Kupplung bestimmt, um ein gewünschtes übertragbares Drehmoment in der Kupplung abhängig von einem zu übertragenden Drehmomentsollwert (42), der vom Überwachungsmodul (30) des Antriebs geliefert wird, und von verschiedenen Signalen physikalischer Größen, des Zustands oder der Steuerung zu erhalten, die am Motor, am Schaltgetriebe und am Rest des Fahrzeugs gemessen werden,
   - und ein Steuermodul (26) des Stellantriebs (24) der Kupplung, das den Stellantrieb steuert, um eine physikalische Steuergröße der Kupplung abhängig von einem vom Drehmoment-Steuermodul (28) der Kupplung gelieferten Sollwert (44) und von verschiedenen Signalen physikalischer Größen, des Zustands oder der Steuerung zu erhalten, die am Motor, am Schaltgetriebe und am Rest des Fahrzeugs gemessen werden,

   wobei das Drehmoment-Steuermodul (28) der Kupplung einen Regelkreis (52) enthält, der das Sollsignal (42) des von der Kupplung übertragbaren Drehmoments und eine Messung oder eine Schätzung (66) des tatsächlich von der Kupplung übertragenen Drehmoments empfängt und ein Abweichungssignal erzeugt, das an einen Korrekturkreis (50) angelegt wird, und die Vorrichtung parallel zum Regelkreis (52) eine Aufbereitungsschaltung (54) in offener Schleife enthält, die das Sollsignal (42) des übertragbaren Drehmoments empfängt, wobei diese Aufbereitungsschaltung (54) Skalierungseinrichtungen, zum Beispiel für eine Normierung des Sollsignals (42) des übertragbaren Drehmoments bezüglich eines maximalen Motordrehmoments, und ggf. ein digitales Filter zur Verstärkung oder Reduzierung bestimmter Frequenzen und zur Anpassung der Drehmomentsteuerung an eine Strategie der Kupplung-Auskupplung des Motors und des Schaltgetriebes enthält.

2. Vorrichtung nach Anspruch 1, **dadurch gekennzeichnet, dass** das Drehmoment-Steuermodul (28) der Kupplung Einrichtungen (58) zur Bestimmung eines Sollwerts (44) des Steuerparameters der Kupplung ausgehend von einer gelernten Änderungskurve (72) des Sollwerts des Steuerparameters abhängig vom durch die Kupplung übertragbaren Drehmomentsollwert enthält.

3. Vorrichtung nach Anspruch 2, **dadurch gekennzeichnet, dass** sie Einrichtungen (74) zur Berechnung der Änderungskurve (72) des Steuerparametersollwerts der Kupplung abhängig vom Sollsignal (42) des von der Kupplung übertragbaren Drehmoments enthält, wobei diese Recheneinrichtungen (74) mit den erwähnten Bestimmungseinrichtungen (58) verbunden sind und am Eingang reale Werte des Steuerparameters der Kupplung und des durch die Kupplung übertragenen Drehmoments empfangen, wobei diese Werte während der Schlupfphasen der Kupplung gemessen oder geschätzt werden.

4. Vorrichtung nach Anspruch 3, **dadurch gekennzeichnet, dass** die Recheneinrichtungen (74) ein mathematisches Modell der erwähnten Änderungskurve und Aktualisierungseinrichtungen der Parameter dieses Modells abhängig von den gemessenen oder geschätzten Änderungen des Steuerparameters der Kupplung und vom von der Kupplung übertragenen Drehmoment enthalten, was es ermöglicht, die Langzeitentwicklungen der Kupplung zu berücksichtigen, wie zum Beispiel ihre Abnutzung.

5. Vorrichtung nach Anspruch 4, **dadurch gekennzeichnet, dass** die Recheneinrichtungen (74) konzipiert sind, um mindestens eine Norm, die die Abweichung zwischen gemessenen Drehmoment- und Steuerparameterwerten misst, und eine mathematische Funktion einer Änderung des Drehmoments abhängig vom Steuerparameter oder einer Änderung des Steuerparameters abhängig vom Drehmoment zu bestimmen, und um diese Norm zu minimieren, indem die Werte ihrer Parameter gesucht werden, die ihre teilweisen Abweichungen annullieren.

6. Vorrichtung nach einem der Ansprüche 2 bis 5, **dadurch gekennzeichnet, dass** der Regelkreis (52) des Drehmoment-Steuermoduls (28) die kurzfristigen Änderungen der Merkmale der Kupplung, wie diejenigen aufgrund der Temperaturschwankungen, und die Modellisierungsfehler der Änderungskurve (72) des Steuerparameters der Kupplung abhängig vom von der Kupplung übertragbaren Drehmomentsollsignal berücksichtigt.

7. Vorrichtung nach einem der vorhergehenden Ansprüche, **dadurch gekennzeichnet, dass** der Korrekturkreis (50) ein Korrekturglied des Typs P (proportional) oder digitales PI (proportional-integral) oder digitales PI2 (proportional-integral-integral) oder digitales PID (proportional-integral-abgeleitet) mit gefilterter Ableitung, oder ein Regler mit Ableiter nicht ganzzahliger Ordnung des Typs CRONE, oder ein Element eines diskretisierten Korrekturglieds RST oder ein Digitalfilter ist.

8. Vorrichtung nach einem der Ansprüche 2 bis 7, **dadurch gekennzeichnet, dass** die Ausgangssignale der Aufbereitungsschaltung (54) in offener Schleife und des Regelkreises (52) an Auswahleinrichtungen (56) angelegt werden, die eines dieser Ausgangssignale an die Bestimmungseinrichtungen (58) eines entsprechenden Sollwerts des Steuerparameters der Kupplung übertragen.

9. Vorrichtung nach Anspruch 8, **dadurch gekennzeichnet, dass** die Auswahleinrichtungen (56) dazu bestimmt sind, die Übertragung des Ausgangssignals des Regelkreises (52) zu blockieren, um die Reaktion der Vorrichtung zu beschleunigen, zum Beispiel, um das Abwürgen des Motors (10) zu vermeiden, und/oder, um die Regelungen im Fall eines Schaltgetriebes (18) mit zwei parallelen Eingangswellen (16) und zwei Verbindungkupplungen (14) dieser Eingangswellen mit der Ausgangswelle des Motors (10) zu entkuppeln.

10. Vorrichtung nach einem der Ansprüche 2 bis 9, **dadurch gekennzeichnet, dass** der Ausgang der Bestimmungseinrichtungen (58) durch Aufbereitungseinrichtungen (60) mit dem Steuermodul (26) des Stellantriebs verbunden ist.

11. Vorrichtung nach einem der Ansprüche 2 bis 7, **dadurch gekennzeichnet, dass** der Ausgang der Aufbereitungsschaltung (54) in offener Schleife mit den Bestimmungseinrichtungen (58) eines Sollwerts des Steuerparameters der Kupplung ausgehend von einer gelernten Änderungskurve (72) dieses Sollwerts abhängig vom von der Kupplung übertragbaren Drehmoment-Sollsignal (42) verbunden ist, wobei die Ausgangssignale dieser Bestimmungseinrichtungen (58) und des Regelkreises (52) an ein Summierglied von Wirkungen (76) angelegt werden, die durch Aufbereitungseinrichtungen (60) mit dem Steuermodul (26) des Stellantriebs verbunden sind.

**12.** Vorrichtung nach Anspruch 11, **dadurch gekennzeichnet, dass** der Ausgang des Regelkreises (52) an einen Eingang des Summiergliads von Wirkungen (76) mittels Auswahleinrichtungen (56) angelegt wird, die es ermöglichen, das Ausgangssignal dieses Regelkreises zu blockieren.

**13.** Vorrichtung nach einem der Ansprüche 2 bis 7, **dadurch gekennzeichnet, dass** das Ausgangssignal der Aufbereitungsschaltung (54) in offener Schleife an einen Eingang eines Summiergliads von Wirkungen (76) angelegt wird, von dem ein anderer Eingang das Ausgangssignal des Regelkreises (52) mittels Auswahleinrichtungen (56) empfängt, die es ermöglichen, diesen Regelkreis (52) zu neutralisieren, wobei der Ausgang des Summiergliads von Wirkungen (76) mit den Bestimmungseinrichtungen (58) eines Steuerparametersollwerts der Kupplung ausgehend von einer gelernten Änderungskurve (72) dieses Sollwerts abhängig vom von der Kupplung übertragbaren Drehmoment-Sollsignal (42) verbunden ist.

**14.** Vorrichtung nach Anspruch 13, **dadurch gekennzeichnet, dass** der Ausgang der Bestimmungseinrichtungen (58) durch Aufbereitungseinrichtungen (60) mit dem Steuermodul (26) des Stellantriebs verbunden ist.

**15.** Vorrichtung nach einem der vorhergehenden Ansprüche, **dadurch gekennzeichnet, dass** sie Einrichtungen zur Schätzung in Echtzeit des von der Kupplung übertragenen Drehmoments enthält, wobei diese Einrichtungen Einrichtungen zur Berechnung des von der Kupplung übertragenen Drehmoments ausgehend von den Gleichungen des Motordrehmoments und der Last des Fahrzeugs und von einer Messung oder einer Schätzung des Motordrehmoments, der Motordrehzahl, der Geschwindigkeit des Fahrzeugs, der Last des Fahrzeugs und der Trägheit des Fahrzeugs enthalten.

**16.** Vorrichtung nach Anspruch 15, **dadurch gekennzeichnet, dass** sie Einrichtungen zur Berechnung des übertragenen Drehmoments von der Motorseite gesehen, Einrichtungen zur Berechnung des übertragenen Drehmoments von der Schaltgetriebeseite gesehen und Einrichtungen (102) zur Auswahl des einen oder anderen der berechneten Drehmomente oder zur linearen Kombination dieser zwei Drehmomente enthält, für den Erhalt eines geschätzten übertragenen Drehmoments (66), das an den Regelkreis (52) des Drehmoment-Steuermoduls (28) angewendet wird.

**17.** Vorrichtung nach Anspruch 15 oder 16, **dadurch gekennzeichnet, dass** sie Einrichtungen zum Lernen der Motorträgheit und der äquivalenten Flüssigkeitsreibung der Antriebseinheit des Motors während Steuerphasen des Motors, während denen das von der Kupplung übertragene Drehmoment Null ist, und Einrichtungen zum Lernen der Trägheit des Fahrzeugs, der äquivalenten Flüssigkeitsreibung des Antriebs rückgeführt an den Eingang des Schaltgetriebes und der Last des Fahrzeugs während der Phasen der Freilaufbewegung des Fahrzeugs enthält, während denen das von der Kupplung übertragene Drehmoment Null ist.

**18.** Vorrichtung nach Anspruch 15 oder 16, **dadurch gekennzeichnet, dass** sie Einrichtungen zur Berechnung der Trägheiten des Motors und des Fahrzeugs, der äquivalenten Flüssigkeitsreibungen des Motors und des Antriebs des Fahrzeugs und der Last des Fahrzeugs ausgehend von Messungen der Drehgeschwindigkeiten des Motors und des Eingangs des Schaltgetriebes und des vom Motor erzeugten Drehmoments verringert um das Drehmoment der Zubehörteile enthält.

**19.** Vorrichtung nach einem der vorhergehenden Ansprüche, **dadurch gekennzeichnet, dass** das Schaltgetriebe (18) zwei parallele Eingangswellen (16) enthält, die je durch eine Kupplung (14) mit der Ausgangswelle (12) des Motors (10) verbunden sind, wobei jede Kupplung (14) von einem Stelltrieb (24) gesteuert wird, der von einer erwähnten Vorrichtung gesteuert wird, die ein Stellantrieb-Steuermodul (26) und ein Drehmoment-Steuermodul (28) der Kupplung enthält.

## Claims

**1.** Controlled adaptive device for a coupling between an engine (10) and a gearbox (18) in a motor vehicle, this device comprising a clutch (14), an actuator (24) for controlling the clutch and means for controlling the actuator (24), **characterised in that** it is divided into a plurality of control modules which are intended to compensate in a cascading manner for the dispersions of the various components of the transmission of the vehicle and which comprise:

- a module (30) for supervising the transmission, using strategies for controlling the driving comfort which control the clutch (14) in terms of torque and/or the engine (10) of the vehicle in terms of speed and/or in terms of torque and which are intended to compensate for the variability of the dynamic behaviour of the engine (10), the gearbox (18) and the remainder of the vehicle (22),

- a module (28) for controlling the clutch (14) in terms of torque, which determines a reference value (44) of a physical control variable for the clutch in order to obtain a desired transmissible torque in the clutch in accordance with a reference (42) of torque to be transmitted, supplied by the module (30) for supervising the transmission and various signals of physical variables, state or control which are measured on the engine, on the gearbox and on the remainder of the vehicle,

- and a module (26) for controlling the actuator (24) of the clutch, which controls the actuator in order to obtain a physical control variable of the clutch in accordance with a reference (44) provided by the module (28) for controlling the clutch in terms of torque and various signals of physical variables, state or control which are measured on the engine, on the gearbox and on the remainder of the vehicle,

- the module (28) for controlling the clutch in terms of torque comprises a control circuit (52) which receives the reference signal (42) of the torque which can be transmitted by the clutch and a measurement or an estimation (66) of the torque which is actually transmitted by the clutch and which generates a deviation signal which is applied to a correction circuit (50), and

the device comprises in parallel with the control circuit (52) an open-loop shaping circuit (54) which receives the reference signal (42) for torque which can be transmitted, this shaping circuit (54) comprising scaling means, for example, for a standardisation of the reference signal (42) for torque which can be transmitted compared with a maximum engine torque and optionally a numerical filter for the amplification or the reduction of some frequencies and the adaptation of the control in terms of torque to a coupling/decoupling strategy of the engine and the gearbox.

2. Device according to claim 1, **characterised in that** the module (28) for controlling the clutch in terms of torque comprises means (58) for determining a reference (44) of the parameter for controlling the clutch from a learned line (72) of variation of the reference of the control parameter in accordance with the torque reference which can be transmitted by the clutch.

3. Device according to claim 2, **characterised in that** it comprises means (74) for calculating the line (72) of variation of the parameter reference for controlling the clutch in accordance with the reference signal (42) of the torque which can be transmitted by the clutch, these calculation means (74) being connected to the above-mentioned determination means (58) and receiving at the input real values of the parameter for controlling the clutch and the torque transmitted by the clutch, these values being measured or estimated during the slipping phases of the clutch.

4. Device according to claim 3, **characterised in that** the calculation means (74) comprise a mathematical model of the above-mentioned variation line and means for updating the parameters of this model in accordance with the measured or estimated variations of the parameter for controlling the clutch and the torque transmitted by the clutch, enabling long-term developments of the clutch to be maintained, such as, for example, the wear thereof.

5. Device according to claim 4, **characterised in that** the calculation means (74) are configured to determine at least one standard which measures the deviation between measured torque values and control parameter values and a mathematical function for variation of the torque in accordance with the parameter for control or variation of the control parameter in accordance with the torque, and to minimise this standard by seeking the values of the parameters thereof which cancel out the partial derivatives thereof.

6. Device according to any one of claims 2 to 5, **characterised in that** the control circuit (52) of the torque control module (28) takes into account the short-term variations of the characteristics of the clutch, such as those resulting from temperature variations, and the modelling defects of the variation line (72) of the control parameter of the clutch in accordance with the reference signal for torque which can be transmitted by the clutch.

7. Device according to any one of the preceding claims, **characterised in that** the correction circuit (50) is a corrector of the numerical P (proportional) or PI (proportional/integral) or numerical PI2 (proportional/integral/integral) type, or numerical PID (proportional/integral/derivative) type with filtered derivative, or a controller with a shunting device of the non-whole order of the CRONE type, or a discretised corrector element RST or a numerical filter.

8. Device according to any one of claims 2 to 7, **characterised in that** the output signals of the open-loop shaping circuit (54) and the control circuit (52) are applied to selection means (56) which transmit one of these output signals to the means (58) for determining a corresponding reference of the control parameter of the clutch.

9. Device according to claim 8, **characterised in that** the selection means (56) are intended to block the transmission of the output signal of the control circuit (52) in order to accelerate the response of the device, for example, in order to prevent the blocking of the engine (10), and/or in order to decouple the controls in the case of a gearbox (18) with two parallel input shafts (16) and two clutches (14) for connecting these input shafts to the output shaft of the engine (10).

10. Device according to any one of claims 2 to 9, **characterised in that** the output of the determination means (58) is connected via shaping means (60) to the control module (26) of the actuator.

11. Device according to any one of claims 2 to 7, **characterised in that** the output of the open-loop shaping circuit (54) is connected to the means (58) for determining a reference of the control parameter of the clutch from a learned line (72) of variation of this reference in accordance with the reference signal (42) for torque which can be transmitted by the clutch, the output signals of these determination means (58) and the control circuit (52) being applied to an effect summer (76) connected by shaping means (60) to the module (26) for controlling the actuator.

12. Device according to claim 11, **characterised in that** the output of the control circuit (52) is applied to an input of the effect summer (76) via selection means (56) which enable the output signal of this control circuit to be blocked.

13. Device according to any one of claims 2 to 7, **characterised in that** the output signal of the open-loop shaping circuit (54) is applied to an input of an effect summer (76) of which another input receives the output signal of the control circuit (52) via selection means (56) which enable this control circuit (52) to be neutralised, the output of the effect summer (76) being connected to the means (58) for determining a parameter reference for controlling the clutch from a learned line (72) of variation of this reference in accordance with the reference signal (42) of torque which can be transmitted by the clutch.

14. Device according to claim 13, **characterised in that** the output of the determination means (58) is connected via shaping means (60) to the module (26) for controlling the actuator.

15. Device according to any one of the preceding claims, **characterised in that** it comprises means for estimating in real time the torque transmitted by the clutch, these means comprising means for calculating the torque transmitted by the clutch from the engine torque and load equations of the vehicle and a measurement or an estimation of the engine torque, the engine speed, the vehicle speed, the load of the vehicle and the inertia of the vehicle.

16. Device according to claim 15, **characterised in that** it comprises means for calculating the torque transmitted when viewed from the engine side, means for calculating the torque transmitted when viewed from the gearbox side, and means (102) for selecting one or other of the torques calculated or a linear combination of these two torques for obtaining an estimated transmitted torque (66) applied to the control circuit (52) of the torque control module (28).

17. Device according to claim 15 or 16, **characterised in that** it comprises means for teaching the engine inertia and the equivalent viscous friction of the mobile equipment of the engine during phases for controlling the engine in which the torque transmitted by the clutch is zero, and means for teaching the inertia of the vehicle, the equivalent viscous friction of the transmission returned to the input of the gearbox and the load of the vehicle during the freewheel movement phases of the vehicle in which the torque transmitted by the clutch is zero.

18. Device according to claim 15 or 16, **characterised in that** it comprises means for calculating the inertias of the engine and the vehicle, equivalent viscous frictions of the engine and the transmission of the vehicle, and the load of the vehicle from measurements of the rotation speeds of the engine and the input of the gearbox and the torque produced by the engine reduced by the torque of the equipment.

19. Device according to any one of the preceding claims, **characterised in that** the gearbox (18) comprises two parallel input shafts (16) which are each connected via a clutch (14) to the output shaft (12) of the engine (10), each clutch (14) being controlled by an actuator (24) which is controlled by an abovementioned device which comprises a module (26) for controlling the actuator and a module (28) for controlling the clutch in terms of torque.

**Fig. 1**

**Fig. 2**

Fig. 3

EP 1 651 880 B1

**Fig. 4**

**Fig. 5**

Fig. 6

Fig. 7

**Fig. 8**

**Fig. 9**

**EP 1 651 880 B1**

## RÉFÉRENCES CITÉES DANS LA DESCRIPTION

**Documents brevets cités dans la description**

- US 2002042325 A1